# EUROPÄISCHE PATENTANMELDUNG

(11) **EP 4 282 830 A1**
(43) Veröffentlichungstag der Anmeldung: **29.11.2023**
(21) Anmeldenummer: 22174746.2
(22) Anmeldetag: 23.05.2022
(51) Int. Cl.: C02F 1/28, C02F 103/20, C02F 3/10, A01C 3/00

(54) **TRENN- UND AUFBEREITUNGSANLAGE FÜR EIN ABFALLPRODUKT IN DER NUTZTIERHALTUNG**

(71) Anmelder: IPM International Project Management S.à r.l., 2184 Luxembourg (LU)
(72) Erfinder: PHILIPP, Alois, 2184 Luxembourg (LU)
(74) Vertreter: Michalski Hüttermann & Partner Patentanwälte mbB

(57) **Zusammenfassung**

Die Erfindung betrifft eine Trenn- und Aufbereitungsanlage für ein ein Gemisch aus Fluid und Feststoffen aufweisendes Abfallprodukt in der Nutztierhaltung, umfassend eine Trennstufe, eine der Trennstufe nachgeschaltete erste Filterstufe und eine der ersten Filterstufe nachgeschaltete zweite Filterstufe, wobei die Trennstufe dazu ausgestaltet ist, das Abfallprodukt in sich aufzunehmen, das Fluid und die Feststoffe voneinander zu trennen, die Feststoffe zur Lagerung an einen Feststoffbehälter abzugeben und das Fluid zur Aufbereitung an die erste Filterstufe abzugeben, die erste Filterstufe dazu ausgestaltet ist, das Fluid in sich aufzunehmen und zur Filterung von in dem Fluid enthaltenen Nährstoffen einem in der ersten Filterstufe angeordneten ersten Filter zuzuführen und das gefilterte Fluid an die zweite Filterstufe abzugeben, und die zweite Filterstufe dazu ausgestaltet ist, das gefilterte Fluid in sich aufzunehmen und zur Klärung einem zweiten Filter zuzuführen und das geklärte Fluid zur Speicherung an einen Fluidspeicher abzugeben. Auf diese Weise wird eine Alternative zum herkömmlichen Trennen und Lagern von Abfallprodukten in der Nutztierhaltung bereitgestellt, mit der das Freisetzen von Stickstoff bzw. das Ausgasen von Ammoniak in die Umgebungsluft deutlich verringert werden kann.

## Beschreibung

Die Erfindung betrifft eine Trenn- und Aufbereitungsanlage für ein ein Gemisch aus Fluid und Feststoffen aufweisendes Abfallprodukt in der Nutztierhaltung, insbesondere für Gülle.

Treibhausgase und der damit verbundene Treibhauseffekt sind Hauptverursacher der globalen Erwärmung und eine große Bedrohung für Mensch, Tier und Umwelt. Die Landwirtschaft, und vor allem die Tierhaltung, sind in hohem Maße für die Emission klimaschädlicher Gase verantwortlich. Insgesamt sind bis zu 20 Prozent der weltweiten Treibhausgase der Tierwirtschaft zuzuschreiben - mehr als dem gesamten Verkehrssektor. Dies ist nicht nur den Nutztieren selbst zuzuschreiben. Insbesondere ihre Ausscheidungen, die sogenannte Rohgülle, und deren Weiterverarbeitung in der Landwirtschaft tragen zu der Entstehung von Treibhausgasen bei.

Herkömmlicherweise werden die Ausscheidungen von Nutztieren vom Stall über einen Verbindungskanal in einen Gülletank geleitet. Darin wird die Rohgülle bis zur Verwendung als Wirtschaftsdünger durch Ausbringung auf landwirtschaftlich genutzte Böden gelagert. Die Rohgülle verliert sowohl in den Stallungen der Nutztiere als auch durch die Lagerung einen hohen Anteil an dem in der Rohgülle befindlichen Stickstoff. Zudem wird die Rohgülle in Feingülle und Feststoffe an der offenen Luft unter der Inkaufnahme von Stickstoffverlusten durch die Verflüchtigung des in der Rohgülle enthaltenen Ammoniaks in die Atmosphäre getrennt. Es kann von einem Verlust von 40% des Stickstoffgehalts bis zur Ausbringung der Rohgülle ausgegangen werden. Der Verlust von Stickstoff und die Freisetzung von Ammoniak in die Umgebungslust tragen wesentlich zu der Umweltbelastung bei, die es in Anbetracht der fortschreitenden Erderwärmung dringen zu vermeiden gilt.

Die aus dem Stand der Technik bekannten Vorrichtungen oder Verfahren erlauben es bisher noch nicht, die Lagerung und Weiterverarbeitung der Rohgülle so weit zu verbessern, dass der Verlust an Stickstoff durch das Ausgasen von Ammoniak in die Atmosphäre und die damit verbundenen Umweltbelastungen durch die Ausscheidungen der Tiere in der landwirtschaftlichen Nutztierhaltung deutlich minimiert werden können.

Davon ausgehend ist es die Aufgabe der Erfindung, eine Alternative zum herkömmlichen Trennen und Lagern von Rohgülle bereitzustellen, mit der die Umweltbelastung und insbesondere das Freisetzen von Stickstoff bzw. das Ausgasen von Ammoniak in die Umgebungsluft deutlich verringert werden kann.

Diese Aufgabe wird durch den Gegenstand des Patentanspruchs 1 gelöst. Bevorzugte Weiterbildungen finden sich in den Unteransprüchen.

Erfindungsgemäß ist somit eine Trenn- und Aufbereitungsanlage für ein ein Gemisch aus Fluid und Feststoffen aufweisendes Abfallprodukt in der Nutztierhaltung vorgesehen, umfassend eine Trennstufe, eine der Trennstufe nachgeschaltete erste Filterstufe und eine der ersten Filterstufe nachgeschaltete zweite Filterstufe, wobei die Trennstufe dazu ausgestaltet ist, das Abfallprodukt in sich aufzunehmen, das Fluid und die Feststoffe voneinander zu trennen, die Feststoffe zur Lagerung an einen Feststoffbehälter abzugeben und das Fluid zur Aufbereitung an die erste Filterstufe abzugeben, die erste Filterstufe dazu ausgestaltet ist, das Fluid in sich aufzunehmen und zur Filterung von in dem Fluid enthaltenen Nährstoffen einem in der ersten Filterstufe angeordneten ersten Filter zuzuführen und das gefilterte Fluid an die zweite Filterstufe abzugeben, und die zweite Filterstufe dazu ausgestaltet ist, das gefilterte Fluid in sich aufzunehmen und zur Klärung einem zweiten Filter zuzuführen und das geklärte Fluid zur Speicherung an einen Fluidspeicher oder zur Entnahme an einen Auslass abzugeben.

Ist vorliegend die Rede von Abfallprodukten in der Nutztierhaltung, sind damit die Ausscheidungen der Nutztiere bzw. die Rohgülle gemeint, die aus einem Gemisch aus Feststoffen und Flüssigkeit besteht.

Es ist somit ein maßgeblicher Punkt der Erfindung, dass aufgrund der Trennung von Fluid und Feststoffen sowie der Weiterverarbeitung der Rohgülle in einem geschlossenen System, der Verlust des in der Rohgülle befindlichen Stickstoffs bzw. Ammoniaks wesentlich vermindert werden kann, sodass insgesamt die Umweltbelastung reduziert werden kann. Die Rohgülle wird nicht gelagert, sondern im Durchlaufbetrieb getrennt und gefiltert. Ein herkömmlicher Gülletank zur Lagerung der Gülle ist nicht mehr erforderlich. Mit dem kontinuierlichen Einleiten der Rohgülle in die Trenn- und Aufbereitungsanlage wird die Ausgasung des Ammoniaks in den Stallungen vermindert sowie durch das Abtrennen der Feststoffe aus der Rohgülle die Eigenschaften der Gülle verbessert. Im Gegensatz zur der Rohgülle, weist die durch die Trennung entstehende Feingülle ein wesentlich geringeres Volumen auf. Zudem entsteht keine Schwimm- und Deckschichtbildung im Gülletank, sodass kein Rühren vor dem Ausbringen der Gülle notwendig ist. Eine Verstopfung der Ausbringaggregate wird auf diese Weise vermieden. Ferner ermöglicht die Feingülle ein schnelles Abfließen der Gülle auf der Pflanzenoberfläche und ein besseres Infiltrationsvermögen in den Boden.

In der Trenn- und Aufbereitungsanlage wird das Abfallprodukt in mehreren aufeinanderfolgenden Stufen behandelt und aufbereitet. Im Ergebnis stehen sowohl die in dem Feststoffbehälter gelagerten Feststoffe, die vorzugsweise zur Düngung ausgestreut werden können, sowie das mit den Nährstoffen angereicherte Filtermaterial, das insbesondere zur Düngerproduktion weiterverwendet werden kann, und das geklärtes Fluid, das insbesondere als Nutzwasser verwendet werden kann, zur Verfügung.

Das Nutzwasser wird in einem Fluidspeicher gespeichert und kann über eine Entnahmevorrichtung entnommen oder direkt an einen Verbraucher über eine Leitung abgegeben werden.

Gemäß einer bevorzugten Weiterbildung der Erfindung umfassen die Trennstufe, die erste Filterstufe und die zweite Filterstufe jeweils einen Großraumbehälter, die über Rohrleitungen miteinander verbindbar sind. Auf diese Weise entsteht ein abgeschlossenes System. Das Abfallprodukt wird der Trennstufe zugeführt und kontinuierlich in die darauffolgenden Stufen weitergeleitet, bis die Endprodukte entstanden sind. Als Großraumbehälter können insbesondere Container eingesetzt werden, die modular miteinander verbunden und jederzeit ausgetauscht werden können. Diese Container können je nach Anforderung bzw. je nach Stufe unterschiedlich dimensioniert sein. Sie können beispielsweise ohne Bodenbefestigung in einer Halle aufgestellt werden.

Eine wesentliche bevorzugte Weiterbildung der Erfindung liegt darin, dass die erste Filterstufe einen ersten aktiven Großraumbehälter und einen zweiten inaktiven Großraumbehälter umfasst, und die erste Filterstufe eine Umschaltvorrichtung zum Abschalten des aktiven Großraumbehälters und Zuschalten des inaktiven Großraumbehälters aufweist. Auf diese Weise weist die erste Filterstufe nicht nur einen Großraumbehälter, sondern zwei vorzugsweise baugleiche Großraumbehälter auf. Unter "aktiver Großraumbehälter" wird der Großraumbehälter verstanden, der aktuell in Betrieb ist und mit der Trennstufe und der zweiten Filterstufe gekoppelt ist. Der "inaktive Großraumbehälter" ist insbesondere ein Austauschbehälter und kommt erst dann zum Einsatz bzw. wird erst dann mit der Trennstufe und der zweiten Filterstufe gekoppelt, wenn zwischen dem aktiven Großraumbehälter und dem inaktiven Großraumbehälter umgeschaltet wird. Auf diese Weise umfasst die erste Filterstufe eine Wechselfilteranlage.

Grundsätzlich ist es im Rahmen der vorliegenden Erfindung möglich, das Fluid und die Feststoffe auf unterschiedlichste Weisen zu trennen. Gemäß einer bevorzugten Weiterbildung der Erfindung ist jedoch vorgesehen, dass die Trennstufe einen Rollenseparator zum Trennen des Fluids und der Feststoffe mittels Schwerkraftfilterung und/oder eine Förderschnecke zum Befördern der Feststoffe zu dem Feststoffbehälter aufweist. Bei der Schwerkraftfilterung handelt es sich um eine mechanische Filterung. Dies hat den Vorteil, dass die Massenbilanz konstant bleibt. Die Summe aus getrenntem Fluid und Feststoffen entspricht der Masse des eingegangenen Abfallproduktes. Das Abfallprodukt fließt auf eine Siebtrommel, durch deren Sieb das Fluid über einen Auffangbehälter zur Abflussseite gelangt und weiter an die erste Filterstufe geleitet wird. Der Rollenseparator nimmt vorzugsweise aus einem internen Vorlagebehälter immer genau die Menge ab, die bei der Konsistenz des Abfallproduktes, wie Trockensubstanzgehalt und Viskosität, separiert werden kann. Die Förderschnecke weist vorzugsweise ein konisches Endstück auf, sodass während der Beförderung des Feststoffes dieser weiter entwässert werden kann.

Gemäß einer bevorzugten Weiterbildung der Erfindung weist die Trennstufe einen Zulauf auf, über den das Abfallprodukt der Trennstufe zuführbar ist. Weiterhin ist vorgesehen, dass der Zulauf einen Durchflusssensor aufweist. Das Abfallprodukt wird aus einem Gülleschacht mit Hilfe einer Pumpe zu der Trennstufe gepumpt und dieser über den Zulauf zugeführt. Die zugeführte Menge an Abfallprodukt kann kontinuierlich überwacht und Fehlfunktionen erkannt werden. Ferner richten sich die Dimensionen der jeweiligen Großraumbehälter nach dem Volumen des aufzubereitenden Abfallproduktes. Je nach Menge an Abfallprodukt können mehrere parallel geschaltete Filterstufen aufgebaut und eingesetzt werden. Ferner umfasst die Trennstufe einen Ablauf sowie vorzugsweise eine Pumpe, mit der das Fluid über den Ablauf der Trennstufe der ersten Filterstufe zugeführt werden kann.

Gemäß einer bevorzugten Weiterbildung der Erfindung umfassen der erste Filter und/oder der zweite Filter je einen Bodenfilter. Bodenfilter sind flächig entlang des Bodens orientierte Filter, die aus mehreren Schichten bestehen. Das Fluid durchläuft die Schichten aufgrund der Schwerkraft und wird während des Durchlaufens der Schichten gefiltert. Die vorliegenden Bodenfilter umfassen vorzugsweise mehrere Schichten aus Mineralstoffen und/oder Pflanzenkohle und/oder Bodenmaterialien. Unter "Bodenmaterialien" werden vorliegend verschiedene Erden, Sand, Kies, Geröll, Fels und/oder Gestein verstanden. Unter "Pflanzenkohle" wird vorliegend ein Produkt verstanden, das aus pflanzlichen Ausgangsstoffen, wie beispielsweise Heckenschnitt, Laub oder Grünabfällen, gewonnen wird. "Pflanzenkohle" umfasst insbesondere alle Holzkohlen und Aktivkohlen. Während Pflanzenkohlen aus einer Vielzahl verschiedener, nicht kontaminierter pflanzlicher Biomassen hergestellt werden können, wird Holzkohle nur aus Holz und nicht aus anderen Biomassen hergestellt. Nach dem European Biochor Certificate (EBC) müssen Pflanzenkohlen einen Kohlenstoffgehalt von über 50 % aufweisen, was eine Reihe von sekundären Biomassen wie Viehmist, Klärschlamm, Knochen usw. als Ausgangsmaterial ausschließt. Durch die hohe Kohlenstoffdichte bereits im Ausgangsmaterial Holz (ca. 50 %) weisen Holzkohlen in der Regel höhere Kohlenstoffgehalte (C > 80 %) auf als Pflanzenkohlen, die z.B. aus Grünschnitt, Trester, Miscanthus-Gräsern, Stroh oder Getreidespelzen hergestellt wurden; hier liegt der C-Gehalt meist über 60 %, aber unter 80 %. Pflanzenkohlen aus Nussschalen oder Bambus weisen jedoch ebenfalls sehr hohe Kohlenstoffgehalte von teils über 80% auf. Biokohle wird landläufig als unspezifischer und umgangssprachlicher Sammelbegriff für verschiedene Herstellungsverfahren verwendet. Biokohlen werden hauptsächlich mit der energetischen Verwertung assoziiert, wobei auch andere Verkohlungsprozesse wie Torrefizierung, Vergasung oder Hydrothermale Karbonisierung (HTC) zum Einsatz kommen. Laut EBC ist Pflanzenkohle ein heterogenes Material, das durch Pyrolyse aus nachhaltig gewonnenen Biomassen hergestellt wird und vorwiegend aus polyaromatischen Kohlenstoffen und Asche besteht. Aktivkohlen können aus jedweden Pflanzenkohlen hergestellt werden, wobei im Anschluss an die Pyrolyse ein Aktivierungsprozess nachgeschaltet wird. Im Aktivierungsprozess wird die Pflanzenkohle bei hohen Temperaturen mit Säuren, Basen, Metallen oder über 800°C heißem Wasserdampf behandelt, wodurch sich die spezifischen Oberflächen der Pflanzenkohlen auf über 1000 m2/g erhöhen lassen, und die Adsorptionskapazität ansteigt. Um zudem den Kohlenstoffgehalt von Aktivkohle zu maximieren und den Aschegehalt zu senken, wird Aktivkohle in der Regel mit Säuren gewaschen. So wird zum Beispiel für die Zulassung des Nahrungsergänzungsmittels E153 (Pflanzenkohle) ein Kohlenstoffgehalt von 95 % vorgeschrieben, was sich nur durch eine solche Nachbehandlung mit Säuren erreichen lässt. In der Regel haben aktivierte Pflanzenkohlen und nicht aktivierte Pflanzenkohle die gleichen Adsorptionseigenschaften, wobei aktivierten Pflanzenkohle effizienter sind und entsprechend geringere Mengen bereits die gewünschte Wirkung erreichen.

Gemäß einer bevorzugten Weiterbildung der Erfindung weist die erste Filterstufe und/oder die zweite Filterstufe ein wenigstens eine Rohrleitung mit Auslassventilen umfassendes Verteilersystem auf, mit dem das Fluid gleichmäßig auf dem ersten bzw. zweiten Filter verteilbar ist. Dabei handelt es sich vorzugsweise um eine Beregnungsanlage, mit der das Fluid gleichmäßig auf den Bodenfilter gesprüht werden kann und auf Grund der Schwerkraft die einzelnen Schichten durchläuft. Das gleichmäßige Verteilen des zu filternden Fluids sorgt für eine gleichmäßige Nährstoffanreicherung des Filtermaterials, sodass das Filtermaterial effizient genutzt und weiterverarbeitet werden kann.

Gemäß einer bevorzugten Weiterbildung der Erfindung weist der erste Filter eine Messeinheit zum Erfassen des Nährstoffgehalts in dem Filtermaterial auf. Abhängig vom Nährstoffgehalt des Filtermaterials können weitere Prozesse gesteuert werden. Der Zeitpunkt, zu dem das Filtermaterial gesättigt oder zur Weiterverarbeitung ausreichend mit Nährstoffen angereichert ist, kann mit Hilfe der Messeinheit genau erfasst werden.

Erfindungsgemäß ist weiterhin ein Verfahren zum Trennen und Aufbereiten eines ein Gemisch aus Fluid und Feststoffen aufweisenden Abfallproduktes in der Nutztierhaltung mit einer oben beschriebenen Trenn- und Aufbereitungsanlage vorgesehen. Das Verfahren umfasst folgende Verfahrensschritte:
S1) Einfüllen des Abfallproduktes in die Trennstufe;
S2) Trennen der in dem Abfallprodukt enthaltenen Feststoffe von dem Fluid mittels Schwerkraftfilterung;
S3) Befördern der Feststoffe zu dem Feststoffbehälter und Weiterleiten des Fluids zu der ersten Filterstufe;
S4) Herausfiltern der in dem Fluid enthaltenen Nährstoffe mittels des ersten Filters in der ersten Filterstufe und Weiterleiten des gefilterten Fluids zu der zweiten Filterstufe; S5) Klären des gefilterten Fluids mittels des zweiten Filters in der zweiten Filterstufe und Weiterleiten des geklärten Fluids zu dem Fluidspeicher;
S6) Entnehmen des geklärten Fluids aus dem Fluidspeicher.

Es ist ein wesentlicher Punkt der Erfindung, dass das Abfallprodukt in die Trenn- und Aufbereitungsanlage zugeführt wird und danach aufbereitet wird, ohne dass eine Zwischenlagerung notwendig ist. Das Abfallprodukt wird vorzugsweise kontinuierlich aus einem Ablaufkanal im Stall der Nutztiere in die Trennstufe gepumpt. In der Trennstufe wird das Abfallfallprodukt in Fluid und Feststoffe mittels des Schwerkraftprinzips getrennt. Die Feststoffe werden zur Lagerung in einen Feststoffbehälter befördert und können zur Düngung ausgetragen werden, während das Fluid weiter an die erste Filterstufe geleitet wird. In der ersten Filterstufe wird das Fluid ein erstes Mal gefiltert, sodass die Feinstoffe, insbesondere die Nährstoffe, herausgefiltert werden. Die Nährstoffe werden während des Filterns an das Filtermaterial gebunden. Das gefilterte Fluid wird an die zweite Filterstufe weitergeleitet. In der zweiten Filterstufe wird das gefilterte Fluid geklärt und mit Hilfe eines zweiten Filters von Schwebestoffen, wie organischen Verbindungen, gereinigt. Am Ende dieses Prozesses entsteht geklärtes Fluid, das beispielsweise als Nutzwasser in der Landwirtschaft verwendet werden kann.

Gemäß einer bevorzugten Weiterbildung der Erfindung umfass das Verfahren folgende weitere Verfahrensschritte:
S0a) Ausstreuen von Pflanzenkohle am Standplatz der Nutztiere,
S0b) Befördern des die Pflanzenkohle aufweisenden Abfallproduktes vom Standplatz der Nutztiere zu der Trennstufe.

Durch das Ausstreuen von Pflanzenkohle direkt im Stall der Nutztiere können wichtige Nährstoffe gebunden sowie die Ammoniak Verflüchtigung im Stall und die Nitratauswaschung reduziert werden. In Verbindung mit der Pflanzenkohle wird der pH-Wert abgesenkt, sodass das Abfallprodukt eine hohe Ammoniakabsorption erreicht. Durch das Ausstreuen von Pflanzenkohle wird jedoch auch die Pflanzenkohle in den Kreislauf der Aufbereitung gebracht, da die Pflanzenkohle durch das Ausstreuen Teil des Abfallproduktes wird. Das entstehende Filtermaterial, das mit den Nährstoffen aus dem Abfallprodukt und der Pflanzenkohle angereichert ist, wird zu hochwertigem Dünger weiterverarbeitet. Der Dünger ist dann in der Lage wichtige Substanzen wie Vitamine, organische Säuren, Enzyme und Antioxidantien zu produzieren. Dadurch verändert sich nach dem Einbringen des Düngers die Mikroflora des Bodens positiv. Das Verhältnis von Kohlenstoff zu Stickstoff wird verbessert, organisches Material umgesetzt, Humus aufgebaut und Nährstoffe werden mobilisiert. All dies zusammen gewährleistet eine nachhaltige, hohe Qualität von Böden und den darauf angebauten Pflanzen. Dank der hohen Verfügbarkeit von Stickstoffbestandteilen, die als Sekretionssubstrate von den heterotrophen Bakterien gebildet werden, kann sich ferner in der Wurzelzone die Mykorrhizae besser ausbreiten. Dieser Bodenpilz löst dort verstärkt Phosphate und macht es dadurch für die Pflanzen verfügbar. Durch die Bildung von Myzelausläufern erhöht sich die Aggregatstabilität des Bodens. Er neigt hierdurch nicht so stark zur Verschlämmung, kann Wasser besser aufnehmen und über längere Trockenperioden speichern.

Gemäß einer bevorzugten Weiterbildung der Erfindung umfasst das Verfahren folgende weitere Verfahrensschritte:
S4a) Messen des Nährstoffgehalts in dem Filtermaterial des ersten Filters des aktiven Großraumbehälters,
S4b) Abschalten des aktiven Großraumbehälters und Zuschalten des inaktiven Großraumbehälters nach einer vorbestimmten Zeitspanne oder wenn ein vorbestimmter Nährstoffgehalt erreicht ist,
S4c) Abtransportieren des abgeschalteten Großraumbehälters zur Weiterverarbeitung des Filtermaterials und Bereitstellen eines neuen inaktiven Großraumbehälters.

Die in Betrieb befindlichen Großraumbehälter bzw. deren Filter werden nach einer vorgegebenen Betriebszeit oder wenn ein vorbestimmter Nährstoffgehalt erreicht ist aus dem Aufbereitungsprozess abgeschaltet und der inaktive Großraumbehälter bzw. der Standby-Filter zugeschaltet. Das Filtermaterial des abgeschalteten Großraumbehälters kann auf diese Weise gegen neues Filtermaterial getauscht und zur Humusproduktion verwendet werden. Auf diese Weise entsteht das Prinzip der Wechselfiltercontainer. Ein voller Großraumbehälter mit fertig angereichertem Filtermaterial wird aus der Trenn- und Aufbereitungsanlage abgekoppelt. Ein vorzugsweise baugleicher Austauschcontainer wird dazu geschaltet, sodass volle Container in regelmäßigen Abständen ausgetauscht, das Filtermaterial entnommen und neues Filtermaterial eingesetzt werden kann. Die Container der ersten Filterstufe sowie der Feststoffbehälter werden in regelmäßigen Abständen, beispielsweise alle 3 Monate, ausgetauscht und entleert.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: schematisch eine Trenn- und Aufbereitungsanlage gemäß einem bevorzugten Ausführungsbeispiel der Erfindung in einer Draufsicht,
- Fig. 2: schematisch ein Trenn- und Aufbereitungsverfahren gemäß einem bevorzugten Ausführungsbeispiel der Erfindung.

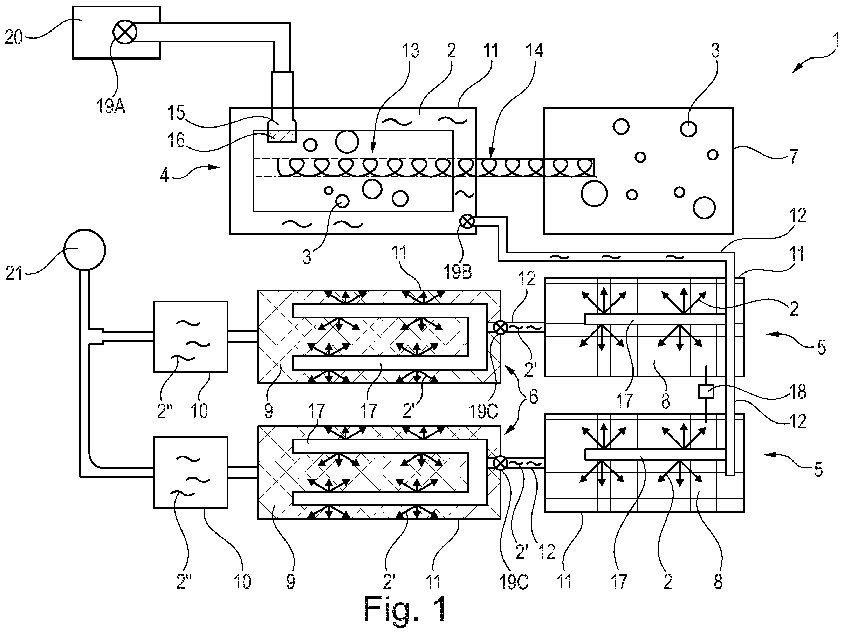

Aus Fig. 1 ist schematisch eine Trenn- und Aufbereitungsanlage 1 gemäß einem bevorzugten Ausführungsbeispiel der Erfindung in einer Draufsicht ersichtlich. Die Trenn- und Aufbereitungsanlage 1 umfasst eine Trennstufe 4, eine erste Filterstufe 5 und eine zweite Filterstufe 6. Im vorliegenden Ausführungsbeispiel sind die Filterstufen 5, 6 doppelt ausgelegt. Das bedeutet, dass jeweils zwei erste Filterstufen 5 und zwei zweite Filterstufen 6 parallel zueinander verlaufen, jedoch beide mit derselben Trennstufe 4 gekoppelt sind.

Das Abfallprodukt wird mit Hilfe einer Pumpe 19A aus dem Stall 20 der Nutztiere über einen Zulauf 15 der Trennstufe zugeführt. Dabei kann der Durchfluss mit Hilfe des Durchflusssensors 16 regelmäßig gemessen werden. Die Trennstufe 4 wird von einem Großraumbehälter 11 und einem in dem Großraumbehälter 11 angeordneten Rollseparator 13 gebildet. Der Rollseparator 13 trennt das Abfallprodukt in Fluid 2 und Feststoffe 3 auf. Über eine Förderschnecke 14 werden die Feststoffe 3 einem Feststoffbehälter 7 zugeführt und dort gelagert. Das Fluid 2 wird mit Hilfe einer weiteren Pumpe 19B aus der Trennstufe 4 zu der ersten Filterstufe 5 gepumpt und über Rohrleitungen 12 befördert. Die erste Filterstufe 5 besteht aus zwei Großraumbehälter 11, in denen jeweils ein erster Filter 8 in Form eines Bodenfilters angeordnet ist. Innerhalb der Großraumbehälter 11 der ersten Filterstufen 5 sind Rohrleitungen mit Auslassventilen 17 angeordnet, mit denen das Fluid 2 gleichmäßig auf dem ersten Filter 8 verteilt werden kann. Während das Fluid 2 die mehreren Schichten des Filtermaterials durchläuft, werden die Nährstoffe herausgefiltert. Die Nährstoffe werden im Filtermaterial gebunden. Der Nährstoffgehalt des Filtermaterials kann regelmäßig mit Hilfe der Messeinheit zum Bestimmen des Nährstoffgehalts 18 bestimmt werden. Das gefilterte Fluid 2' wird über Rohrleitungen 12 der zweiten Filterstufe 6 zugeführt. Die zweite Filterstufe 6 besteht aus zwei Großraumbehältern 11, in denen ein zweiter Filter 9 angeordnet ist. Über eine dritte Pumpe 19C und Rohrleitungen mit Auslassventilen 17 wird das gefilterte Fluid 2' gleichmäßig auf dem zweiten Filter 9 verteilt. Der zweite Filter 9 klärt das gefilterte Fluid 2' und entfernt Schwebestoffe, wie beispielsweise organische Verbindungen, aus dem gefilterten Fluid 2'. Das Endprodukt ist geklärtes Fluid 2", das einem Fluidspeicher 10 zugeführt wird. Das geklärte Fluid 2" eignet sich als Nutzwasser und kann entweder aus den Fluidspeichern 10 entnommen oder an einen Verbraucher 21 geleitet werden. Der Verbraucher 21 kann beispielsweise auch der Stall 20 sein, sodass der Kreislauf geschlossen wird.

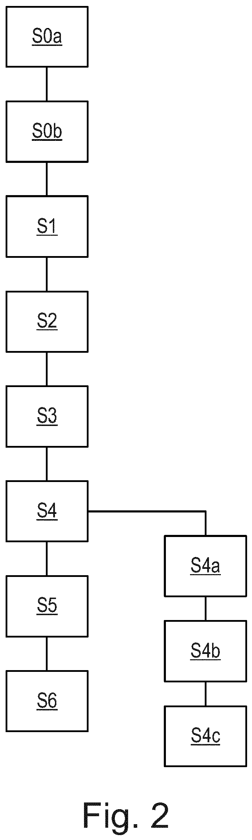

Fig. 2 zeigt schematisch ein Trenn- und Aufbereitungsverfahren gemäß einem bevorzugten Ausführungsbeispiel der Erfindung. In einem vorbereitenden Schritt S0a wird Pflanzenkohle am Standplatz der Nutztiere ausgestreut. Die Pflanzenkohle wird zusammen mit dem Abfallprodukt vom Standplatz der Nutztiere zu der Trennstufe 4 gepumpt S0b. Das Abfallprodukt wird der Trennstufe 4 zugeführt S1. In der Trennstufe 4 wird das Abfallprodukt in Feststoffe 3 und Fluid 2 getrennt S2. Die Feststoffe 3 werden zu einem Feststoffbehälter 7 befördert, während das Fluid 2 der ersten Filterstufe 5 zugeführt wird, S3. In der ersten Filterstufe 5 werden die Nährstoffe aus dem Fluid 2 gefiltert S4 und in dem Filtermaterial gebunden.

Der Nährstoffgehalt in dem Filtermaterial kann optional gemessen werden S4a. Zum Austauschen des ersten Filters 8, wird der aktive Großraumbehälter angeschaltet und der inaktive Großraumbehälter zugeschaltet S4b. Der abgeschaltete Großraumbehälter wird abtransportiert und das Filtermaterial zur Weiterverarbeitung entnommen. Danach wird neues Filtermaterial hinzugefügt, sodass ein neuer inaktiver Großraumbehälter bereitgestellt wird S4c.

Das gefilterte Fluid 2' wird in einer zweiten Filterstufe 6 geklärt S5. In der zweiten Filterstufe 6 werden sämtliche Schwebestoffe aus dem gefilterten Fluid 2' entfernt. Das geklärte Fluid 2" wird einem Fluidspeicher 10 zugeführt und kann entweder direkt entnommen S6 und als Nutzwasser verwendet oder an einen Verbraucher 21 geleitet werden.

### Bezugszeichenliste

- 1: Trenn- und Aufbereitungsanlage
- 2: Fluid
- 2': gefiltertes Fluid
- 2": geklärtes Fluid
- 3: Feststoff
- 4: Trennstufe
- 5: erste Filterstufe
- 6: zweite Filterstufe
- 7: Feststoffbehälter
- 8: erster Filter
- 9: zweiter Filter
- 10: Fluidspeicher
- 11: Großraumbehälter
- 12: Rohrleitung
- 13: Roll separator
- 14: Förderschnecke
- 15: Zulauf
- 16: Durchflusssensor
- 17: Rohrleitung mit Auslassventil
- 18: Messeinheit zum Bestimmen des Nährstoffgehalts
- 19A, 19B, 19C: Pumpe
- 20: Stall
- 21: Verbraucher
- S0a: Ausstreuen von Pflanzenkohle
- S0b: Befördern des Abfallproduktes vom Standplatz der Nutztiere zu der Trennstufe
- S1: Einfüllen des Abfallproduktes in die Trennstufe
- S2: Trennen der in dem Abfallprodukt enthaltenen Feststoffe von dem Fluid

- S3: Befördern der Feststoffe zu dem Feststoffbehälter und Weiterleiten des Fluids zu der ersten Filterstufe
- S4: Herausfiltern der in dem Fluid enthaltenen Nährstoffe
- S4a: Messen des Nährstoffgehalts in dem Filtermaterial des ersten Filters
- S4b: Abschalten des aktiven Großraumbehälters und Zuschalten des inaktiven Großraumbehälters
- S4c: Abtransportieren des abgeschalteten Großraumbehälters zur Weiterverarbeitung des Filtermaterials und Bereitstellen eines neuen inaktiven Großraumbehälters
- S5: Klären des gefilterten Fluids
- S6: Entnehmen des gereinigten Fluids aus dem Fluidspeicher

## Patentansprüche

1. Trenn- und Aufbereitungsanlage (1) für ein ein Gemisch aus Fluid (2) und Feststoffen (3) aufweisendes Abfallprodukt in der Nutztierhaltung, umfassend
eine Trennstufe (4), eine der Trennstufe (4) nachgeschaltete erste Filterstufe (5) und eine der ersten Filterstufe (5) nachgeschaltete zweite Filterstufe (6), wobei
die Trennstufe (4) dazu ausgestaltet ist, das Abfallprodukt in sich aufzunehmen, das Fluid (2) und die Feststoffe (3) voneinander zu trennen, die Feststoffe (3) zur Lagerung an einen Feststoffbehälter (7) abzugeben und das Fluid (2) zur Aufbereitung an die erste Filterstufe (5) abzugeben,
die erste Filterstufe (5) dazu ausgestaltet ist, das Fluid (2) in sich aufzunehmen und zur Filterung von in dem Fluid (2) enthaltenen Nährstoffen einem in der ersten Filterstufe (5) angeordneten ersten Filter (8) zuzuführen und das gefilterte Fluid (2') an die zweite Filterstufe (6) abzugeben, und
die zweite Filterstufe (6) dazu ausgestaltet ist, das gefilterte Fluid (2') in sich aufzunehmen und zur Klärung einem zweiten Filter (9) zuzuführen und das geklärte Fluid (2") zur Speicherung an einen Fluidspeicher (10) oder zur Entnahme an einen Auslass abzugeben.

2. Trenn- und Aufbereitungsanlage (1) nach Anspruch 1, wobei die Trennstufe (4), die erste Filterstufe (5) und die zweite Filterstufe (6) jeweils einen Großraumbehälter (11) umfassen, die über Rohrleitungen (12) miteinander verbindbar sind.

3. Trenn- und Aufbereitungsanlage (1) nach Anspruch 1 oder 2, wobei die erste Filterstufe (5) einen ersten aktiven Großraumbehälter und einen zweiten inaktiven Großraumbehälter umfasst, und
die erste Filterstufe (5) eine Umschaltvorrichtung zum Abschalten des aktiven Großraumbehälters und Zuschalten des inaktiven Großraumbehälters aufweist.

4. Trenn- und Aufbereitungsanlage (1) nach einem der vorherigen Ansprüche, wobei die Trennstufe (4) einen Rollenseparator (13) zum Trennen des Fluids (2) und der Feststoffe (3) mittels Schwerkraftfilterung und/oder eine Förderschnecke (14) zum Befördern der Feststoffe (3) zu dem Feststoffbehälter (7) aufweist.

5. Trenn- und Aufbereitungsanlage (1) nach einem der vorherigen Ansprüche, wobei die Trennstufe (4) einen Zulauf (15) aufweist, über den das Abfallprodukt der Trennstufe (4) zuführbar ist, wobei der Zulauf (15) einen Durchflusssensor (16) aufweist.

6. Trenn- und Aufbereitungsanlage (1) nach einem der vorherigen Ansprüche, wobei der erste Filter (8) und/oder der zweite Filter (9) je einen Bodenfilter umfassen, wobei der Bodenfilter ein aus mehreren Schichten bestehendes Filtermaterial aus Mineralstoffen und/oder Pflanzenkohle und/oder Bodenmaterialien aufweist.

7. Trenn- und Aufbereitungsanlage (1) nach einem der vorherigen Ansprüche, wobei die erste Filterstufe (5) und/oder die zweite Filterstufe (6) ein wenigstens eine Rohrleitung mit Auslassventilen (17) umfassendes Verteilersystem aufweist, mit dem das Fluid (2, 2') gleichmäßig auf dem ersten Filter (8) bzw. zweiten Filter (9) verteilbar ist.

8. Trenn- und Aufbereitungsanlage (1) nach einem der vorherigen Ansprüche, wobei der erste Filter (8) eine Messeinheit zum Erfassen des Nährstoffgehalts (18) in dem Filtermaterial aufweist.

9. Verfahren zum Trennen und Aufbereiten eines ein Gemisch aus Fluid (2) und Feststoffen (3) aufweisenden Abfallproduktes in der Nutztierhaltung mit einer Trenn- und Aufbereitungsanlage (1) nach einem der vorherigen Ansprüche, umfassend folgende Verfahrensschritte:
S1) Einfüllen des Abfallproduktes in die Trennstufe (4);
S2) Trennen der in dem Abfallprodukt enthaltenen Feststoffe (3) von dem Fluid (2) mittels Schwerkraftfilterung;
S3) Befördern der Feststoffe (3) zu dem Feststoffbehälter (7) und Weiterleiten des Fluids (2) zu der ersten Filterstufe (5);
S4) Herausfiltern der in dem Fluid (2) enthaltenen Nährstoffe mittels des ersten Filters (8) in der ersten Filterstufe (5) und Weiterleiten des gefilterten Fluids (2') zu der zweiten Filterstufe (9);
S5) Klären des gefilterten Fluids (2') mittels des zweiten Filters (9) in der zweiten Filterstufe (6) und Weiterleiten des geklärten Fluids (2") zu dem Fluidspeicher (10);
S6) Entnehmen des geklärten Fluids (2") aus dem Fluidspeicher (10).

10. Verfahren nach Anspruch 9, mit folgenden weiteren Verfahrensschritten:
S0a) Ausstreuen von Pflanzenkohle am Standplatz der Nutztiere,
S0b) Befördern des die Pflanzenkohle aufweisenden Abfallproduktes vom Standplatz der Nutztiere zu der Trennstufe (4).

11. Verfahren nach Anspruch 9 oder 10, mit folgenden weiteren Verfahrensschritten:
S4a) Messen des Nährstoffgehalts in dem Filtermaterial des ersten Filters (8) des aktiven Großraumbehälters,
S4b) Abschalten des aktiven Großraumbehälters und Zuschalten des inaktiven Großraumbehälters nach einer vorbestimmten Zeitspanne oder wenn ein vorbestimmter Nährstoffgehalt erreicht ist,
S4c) Abtransportieren des abgeschalteten Großraumbehälters zur Weiterverarbeitung des Filtermaterials und Bereitstellen eines neuen inaktiven Großraumbehälters.
